# EUROPÄISCHE PATENTANMELDUNG

(11) **EP 0 860 259 A2**
(43) Veröffentlichungstag der Anmeldung: **26.08.1998**
(21) Anmeldenummer: 97121717.9
(22) Anmeldetag: 10.12.1997
(51) Int. Cl.: B29C 31/00, B29D 17/00

(54) **Vorrichtung für den Transport von Substraten**

(30) Priorität: 20.02.1997 DE 19706594
(71) Anmelder: Leybold Systems GmbH, D-63450 Hanau am Main (DE)
(72) Erfinder: König, Michael, 60529 Frankfurt (DE)

(57) **Zusammenfassung**

Bei einer Vorrichtung für den Transport von kreisscheibenförmigen Substraten (29, ...), beispielsweise von compact discs, von einer vorzugsweise als Karusselltransporteinrichtung ausgebildeten Ausgangsstation (15) über mehrere Prozeßstationen (16, 17) zu einer Endstation (18), wobei die Prozeßstationen das Bearbeiten, z. B. Beschichten, Lackieren, Trocknen, Abkühlen, Kontrollieren, Sortieren und Sammeln der Substrate bewirken und wobei Greifarme oder Manipulatoren (6, 7) mit schwenkbaren oder längsverschiebbaren Greifern (8, 9, 10, 11) den Weitertransport der Substrate von Station (I) zu Station (IV) ermöglichen, ist ein Kurvengetriebe mit Doppelhubeinrichtung (3) mit zwei Hubtrieben (13, 14) vorgesehen, an denen paarweise die Manipulatoren (6, 7) fest angeordnet sind, wobei das Getriebe mit Hubeinrichtung (3) in gleichem Abstand von vier Stationen (15 bis 18), beispielsweise von der Ausgangsstation (15), der Beschichtungsstation (16) einer Transporteinrichtung (18) mit hin- und herbewegbaren Transportschlitten (19) und einer Lackierstation (17) angeordnet ist und wobei die beiden Hubtriebe (13, 14) gleichzeitig mit ihren Manipulatoren (6, 7) eine gegenläufige Hubbewegung (Vertikalbewegung) und eine diese überlagerte oder sich an diese anschließende Schwenkbewegung um etwa eine ¼-Umdrehung ausführen.

## Beschreibung

Die Erfindung betrifft eine Vorrichtung für den Transport von kreisscheibenförmigen Substraten, beispielsweise von compact discs, von einer vorzugsweise als Karusselltransporteinrichtung ausgebildeten Ausgangsstation über mehrere Prozeßstationen zu einer Endstation, wobei die Prozeßstationen das Bearbeiten, z. B. Beschichten, Lackieren, Trocknen, Abkühlen, Kontrollieren und Sortieren der Substrate bewirken und wobei Manipulatoren mit schwenkbaren oder längsverschiebbaren Greifern den Weitertransport der Substrate von Station zu Station ermöglichen.

Bekannt ist eine Vorrichtung (DOS 41 27 341) zum selbsttätigen Gießen, Beschichten, Lackieren, Prüfen und Sortieren von Werkstücken - insbesondere von kreisscheibenförmigen, flachen Substraten aus Kunststoff, wie beispielsweise optischen oder magneto-optischen Datenspeichern - mit mindestens einer die Substrate von einer Herstellstation, beispielsweise einer Spritzgießmaschine, zu den Bearbeitungsstationen weiterbefördernden Transporteinrichtung und mit jeweils einer Ablagestation zur getrennten Ablage von fertig bearbeiteten und als einwandfrei befundenen und von mit Fehlern behafteten Werkstücken, die gekennzeichnet ist durch eine Substrattransporteinrichtung mit einem längs einer geraden Linie hin und her bewegbaren Transportschlitten mit jeweils drei beiderseits des Schlittens angeordneten Transportarmen mit Substrathaltern, einer auf der einen Seite des Transportschlittens vorgesehenen Vakuumbeschichtungsvorrichtung und einer auf der anderen Seite des Transportschlittens angeordneten Ablageeinrichtung mit mindestens je einer Ablage für gut befundene und für auszusondernde Substrate und einer Vorrichtung zur Qualitätsprüfung und mit einer in der Bewegungsrichtung des Transportschlittens der Spritzgießmaschine gegenüberliegend angeordneten Karussell-Transporteinrichtung oder einem Drehtisch mit verschiedenen, an seinen Umfang angeordneten Lackier-, Trocknungs-, Bedruckungs-, Bildkontroll- und Zentriereinrichtungen, wobei der Drehtisch die Substrate in einer Vielzahl von Transportschritten -vorzugsweise in neunzehn Transportschritten - auf einer Kreisbahn um volle 360 Grad um die vertikale Rotationsachse des Drehtisches bewegt und wobei der Transportschlitten bei seiner Bewegung in der einen Richtung mit seinem ersten Arm ein erstes Substrat in einem einzigen Transportschritt von der Übernahmestation der Abgabestation zur Ein- bzw. Ausschleusstation der Vakuumbeschichtungsvorrichtung transportiert und ebenso gleichzeitig mit dem Transportarm ein zweites Substrat von der Beschichtungsstation zu einer Lackierstation und ebenso ein drittes Substrat von der Lackierstation zum Drehtisch bewegt, der sich schrittweise und im gleichen Takt dreht, und wobei der Transportschlitten bei seiner anschließenden Bewegung in entgegengesetzter Richtung ein fertig bearbeitetes Werkstück zur Prüfvorrichtung und ein bereits geprüftes Werkstück von hier aus zur zweiten Ablage transportiert.

Diese bekannte Vorrichtung hat den Nachteil, daß ihre Arbeitsgeschwindigkeit bzw. ihre Arbeitszyklen von der am langsamsten arbeitenden Bearbeitungsstation - der Lackiereinrichtung - bestimmt wird, so daß die Leistung der gesamten Vorrichtung begrenzt bleibt.

Bekannt ist weiterhin eine Vorrichtung dieser Art (DOS 44 08 537) bei der mindestens ein mit Substrathaltern versehenes Karussell sowohl mit einem ersten zweiarmigen Manipulator, dessen Arme jeweils einen Greifer aufweisen, als auch mit einem zweiten zweiarmigen Manipulator, dessen beide Arme jeweils mehrere Greifer aufweisen, zusammenwirkt, wobei der zweite Manipulator vom zweiten Karussell in einem Zeitabschnitt gleichzeitig mehrere Substrate abhebt und der korrespondierenden zweiten Prozeßstation zuführt, die zur gleichzeitigen Bearbeitung mehrerer Substrate ausgebildet ist, während der erste Manipulator in demselben Zeitabschnitt vom zweiten Karussell in mehreren Schwenkbewegungen seiner beiden Greiferarme jeweils ein Substrat abhebt und der ersten Prozeßstation, die zur Bearbeitung von jeweils einem Substrat ausgebildet ist, zuführt, bzw. von dieser Prozeßstation aus auf das Zweite Karussell zurücktransportiert.

Der vorliegenden Erfindung liegt nun die Aufgabe zugrunde, eine Vorrichtung der infragestehenden Art so auszubilden, daß mit nur einem Antrieb eine Schleuse verschlossen und gleichzeitig weitere Substrate manipuliert werden können, und zwar bei möglichst geringem Steuerungsaufwand. Außerdem sollen die Bewegungen der Manipulatoren eine Kollision miteinander ausschließen.

Gemäß der vorliegenden Erfindung wird diese Aufgabe gelöst durch ein Kurvengetriebe mit Doppelhubeinrichtung mit zwei Hubtrieben, an denen paarweise fest angeordnete Manipulatoren vorgesehen sind, wobei das Getriebe mit Hubeinrichtung in gleichem Abstand von vier Stationen, beispielsweise von der Ausgangsstation, der Beschichtungsstation einer Transporteinrichtung mit hin- und herbewegbaren Transportschlitten und einer Lackierstation angeordnet ist und wobei die beiden Hubtriebe gleichzeitig mit ihren Manipulatoren eine gegenläufige Hubbewegung (Vertikalbewegung) und eine diese überlagerte oder sich an diese anschließende Schwenkbewegung um eine etwa ¼-Umdrehung ausführen.

Weitere Einzelheiten und Merkmale der Erfindung sind in den Patentansprüchen gekennzeichnet.

Die Erfindung läßt die verschiedensten Ausführungsmöglichkeiten zu; eine davon ist in den anhängenden Zeichnungen näher dargestellt, und zwar zeigen:
- Fig. 1: die Draufsicht auf eine Vorrichtung,
- Fig. 2: das Getriebe der Vorrichtung nach Fig. 1 in der Seitenansicht und in vergrößerter Darstellung und
- Fig. 3: das Getriebe gemäß Fig. 2 in der Draufsicht und

Die Vorrichtung besteht im wesentlichen aus einem nicht näher dargestellten Maschinengestell, in dessen Zentrum ein Kurvengetriebe mit Doppelhubeinrichtung 3 (im weiteren Text kurz als Getriebe bezeichnet) fest angeordnet und mit zwei Hubtrieben 13, 14 ausgestattet ist, an denen jeweils Manipulatoren 6, 7 in Gestalt von Armpaaren mit Substratgreifern, 8, 9 bzw. 10, 11 befestigt sind. Die Hubtriebe 13, 14 sind lotrecht ausgerichtet und werden vom Getriebe 3 um ein vorbestimmtes Maß auf- und abwärts bewegt, und zwar jeweils gegenläufig; gleichzeitig oder auch zeitversetzt mit dieser Auf- und Abwärtsbewegung der Hubtriebe 13, 14 mit den daran befestigten Manipulatoren 6, 7 ist diesen Bewegungen noch eine Schwenkbewegung beider Hubtriebe um die lotrechte Schwenkachse S um z. B. 90° überlagert bzw. nachgeschaltet. Bewegt sich also der Hubtrieb 13, beispielsweise aufwärts, dann schwenkt der Manipulator 6 mit den beiden Substratgreifern 8, 9 noch während der Aufwärtsbewegung oder aber am Ende der Aufwärtsbewegung um 90° entgegen dem Uhrzeigersinn, so daß der Substratgreifer 9 von der Station I zur Station II gelangt und dabei das Substrat 29, ... von I nach II transportiert, wobei synchron hierzu der Substratgreifer 8 von der Station II zur Station III gelangt.

Während der Hubtrieb 13 sich aufwärts bewegt, fährt wiederum synchron hierzu der Hubtrieb 14 abwärts, wobei am Ende dieser Abwärtsbewegung die Schwenkbewegung des Manipulators 7 entgegensetzt dem Uhrzeigersinn den Greifer 11 von der Station III zur Station IV bewegt, so daß am Ende dieses Zyklus, d. h. dieser einen Auf-/Abwärtsbewegung ein Substrat 29, ... von der Station I zur Station II, das in der Station II vorhandene Substrat von dieser zur Station III und das vorher in der Station III vorhandene Substrat zur Station IV bewegt hat. Das zu Beginn dieses Zyklus in der Station IV vorhandene Substrat würde bei der beispielsweise dargestellten Anordnung der einzelnen Behandlungsstationen nicht von der Station IV zur Station I zurückbefördert, sondern würde vom längsverschiebbaren Greifer 12 zur Station V transportiert (in Pfeilrichtung P). Es ist klar, daß am Ende der Schwenkbewegung entgegen dem Uhrzeigersinn um ¼-Umdrehung, also am Ende des ersten Zyklus die Umkehrung der oben beschriebenen Bewegungen erfolgt und sich die Manipulatoren 6, 7 wieder im Uhrzeigersinn in der Zeichnung dargestellt in die Ausgangsstellung zurückbewegen.

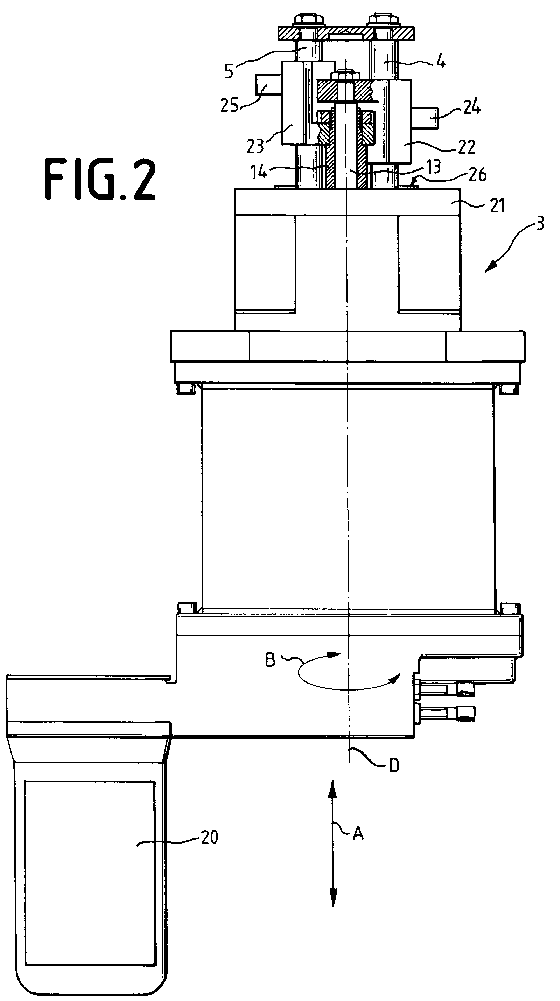

Wie Fig. 2 in vergrößerter Darstellung zeigt, ist das Getriebe 3 mit Motor 20 mit zwei Hubtrieben 13, 14 ausgestattet, die koaxial zueinander angeordnet sind und als Hubhülse 14 und Hubwelle 13 ausgebildet sind und die beide sowohl eine Hubbewegung (Auf-/Abwärtsbewegung) in Pfeilrichtung A, als auch eine Drehbewegung in Pfeilrichtung B ausführen. Auf dem Getriebedeckel 21. bzw. auf dem in diesem drehbar gelagerten Kopfteil 26 sind insgesamt vier Führungsachsen 4, 4' bzw. 5, 5' fest gelagert, die der Führung der mit den Hubtrieben 13 bzw. 14 verschraubten Führungshülsen 22 ,23 mit Flanschen 24, 25 und Manipulatoren 6, 7 dienen.

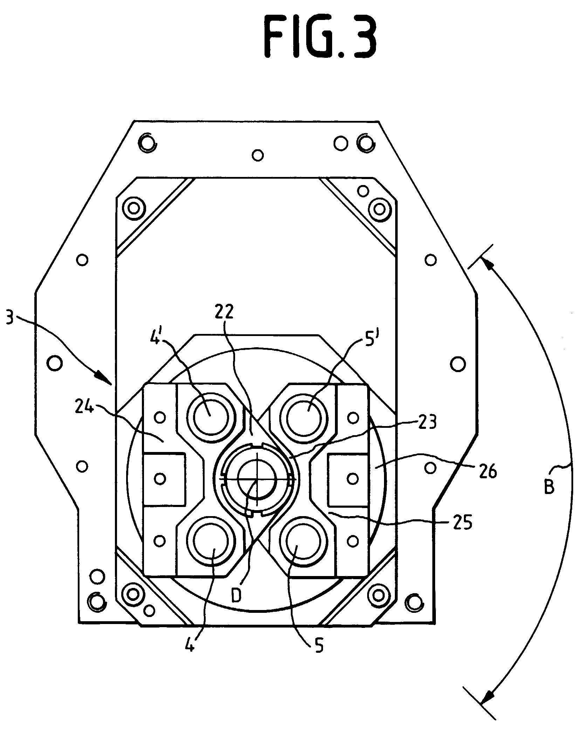

In Fig. 3 ist das Getriebe 3 in der Draufsicht dargestellt, wobei die Flansche 24, 25 ohne die an ihnen befestigbaren Manipulatoren (Befestigungsarme) 6, 7 eingezeichnet sind.

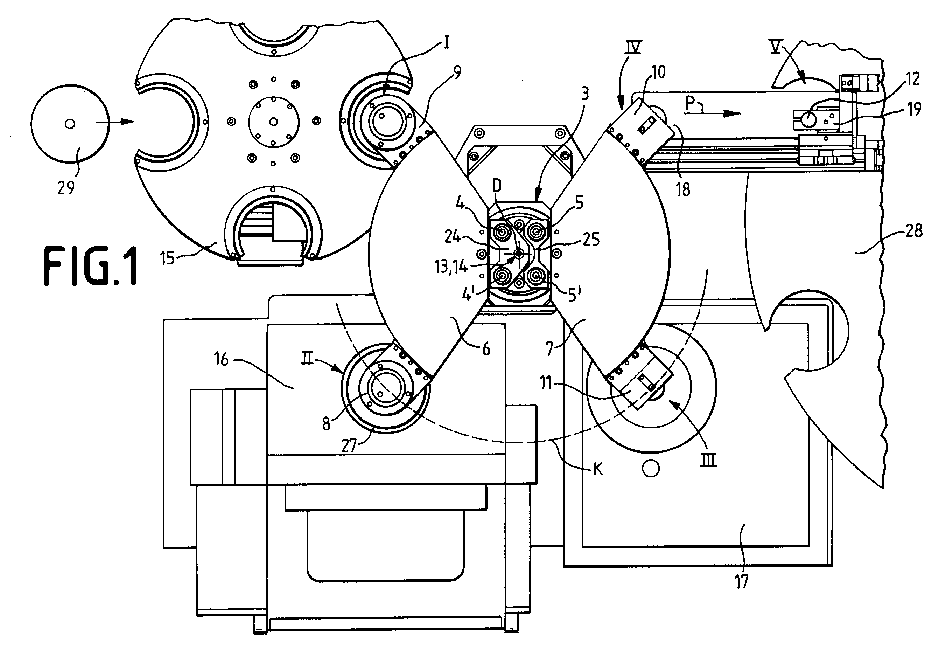

Die kreisscheibenförmigen Substrate 29, ... (nur einmal in Fig. 1 dargestellt) werden von der als Karussell ausgebildeten Ausgangsstation 15 in die Position I transportiert und vom Greifer 9 angehoben und dann in die Position II geschwenkt, in der der Greifer 9 abgesenkt wird, bis er auf der Schleusenöffnung 27 der Beschichtungsstation liegt und diese Schleusenöffnung 27 druckdicht verschließt. Sobald der Verschlußzustand erreicht ist, löst sich das Substrat vom Greifer 9 und wird danach dem Beschichtungsprozeß unterworfen. Nach erfolgter Beschichtung wird die Schleusenöffnung 27 durch Anheben des Manipulators 6 bzw. des Greifers 9 geöffnet und der Manipulator 6 schwenkt in die Position I im Uhrzeigersinn zurück, wobei mit gleicher Schwenkbewegung B der Greifer 8 die Position II erreicht und dort zur Übernahme des beschichteten Substrats abgesenkt wird. Der Weitertransport des Substrats erfolgt nun in vorher beschriebenem Zyklus aus Schwenkbewegung B und Hubbewegung A mit dem Vorteil, daß eine gegenseitige Behinderung der einzelnen Manipulatoren 6, 7 völlig ausgeschlossen ist, so daß eine höchstmögliche Betriebssicherheit erzielt wird.

Wenn das Substrat die Position IV erreicht hat und dort vom Greifer 10 an den Greifer 12 des Transportschlittens 19 übergeben worden ist, fährt dieser Transportschlitten 19 in die Position V und übergibt das Substrat hier dem Karussell 28, das das Substrat zur Weiterbearbeitung, z. B. zum Trocknen, Sortieren und Stapeln weitertransportiert. Dieses Karussell 28 ist in Fig. 1 nur strichliert und nur teilweise dargestellt.

### Bezugszeichenliste

- 3: Kurvengetriebe mit Doppelhubeinrichtung
- 4, 4': Führungsachse, Führungsbolzen
- 5, 5': Führungsachse, Führungsbolzen
- 6: Manipulator, Betätigungsarm
- 7: Manipulator, Betätigungsarm
- 8: Greifer, Substratgreifer
- 9: Greifer, Substratgreifer
- 10: Greifer, Substratgreifer
- 11: Greifer, Substratgreifer
- 12: Greifer
- 13: Hubtrieb, Hubwelle
- 14: Hubtrieb, Hubhülse
- 15: Ausgangsstation
- 16: Prozeßstation, Beschichtungsstation
- 17: Prozeßstatlon, Lackierstation
- 18: Endstation, Transporteinrichtung
- 19: Transportschlitten
- 20: Motor
- 21: Getriebedeckel
- 22: Führungshülse
- 23: Führungshülse
- 24: Flansch
- 25: Flansch
- 26: Kopfteil
- 27: Schleusenöffnung
- 28: Karussell
- 29, 29',: Substrat

## Patentansprüche

1. Vorrichtung für den Transport von kreisscheibenförmigen Substraten (29, ...), beispielsweise von compact discs, von einer vorzugsweise als Karusselltransporteinrichtung ausgebildeten Ausgangsstation (15) über mehrere Prozeßstationen (16, 17) zu einer Endstation, wobei die Prozeßstationen das Bearbeiten, z. B. Beschichten, Lackieren, Trocknen, Abkühlen, Kontrollieren, Sortieren und Sammeln der Substrate bewirken und wobei Manipulatoren (6, 7) mit schwenkbaren oder längsverschiebbaren Greifern (8, 9, 10, 11) den Weitertransport der Substrate von Station (I) zu Station (IV) ermöglichen, **gekennzeichnet durch** ein Kurvengetriebe mit Doppelhubeinrichtung (3) mit zwei Hubtrieben (13, 14), an denen paarweise fest angeordnete (Greiferarme) Manipulatoren (6, 7) vorgesehen sind, wobei das Getriebe (3) mit Hubeinrichtung in gleichem Abstand von mehreren Stationen (15 bis 18), beispielsweise von der Ausgangsstation (15), der Beschichtungsstation (16) einer Transporteinrichtung (18) mit hinund herbewegbaren Transportschlitten (19) und einer Lackierstation (17) angeordnet ist und wobei die beiden Hubtriebe (13, 14) gleichzeitig mit ihren Manipulatoren (6, 7) eine gegenläufige Hubbewegung (Vertikalbewegung) und eine diese überlagerte oder sich an diese anschließende Schwenkbewegung um eine etwa ¼-Umdrehung ausführen.

2. Vorrichtung nach Anspruch 1, **dadurch gekennzeichnet**, daß die beiden Manipulatoren (Betätigungsarme) (6, 7) jeweils mit mindestens zwei Greifern (8, 9 bzw. 10, 11) versehen sind, wobei der eine Manipulator (6) mit einer Hubwelle (13) und der andere Manipulator (7) mit einer Hubhülse (14) verbunden ist und die Hubhülse (14) die Hubwelle (13) umschließend auf dieser verschiebbar ist und Hubwelle (13) und Hubhülse (14) zusammen um eine vertikale Achse (D) drehbar gelagert sind.

3. Vorrichtung nach den Ansprüchen 1 und 2**, da****durch** **gekennzeichnet**, daß Hubwelle (13) und Hubhülse (14) durch ein flanschförmiges Kopfteil (26) hindurchgeführt sind, das motorisch um die Achse (D) drehbar am Gebtriebegehäuse (3) gelagert ist und auf dessen Oberseite zwei Paare von Führungsachsen oder Führungsbolzen (4, 4' bzw. 5, 5') fest angeordnet sind, auf denen die Manipulatoren (6, 7) an Hülsen (22, 23) gleitend gehalten und geführt sind.

4. Vorrichtung nach den Ansprüchen 1 bis 3, **dadurch gekennzeichnet**, daß die Abstände der Greifer (8, 9, 10, 11) von der Schwenkachse (D) jeweils gleich groß bemessen sind, bzw. auf einem gemeinsamen Kreisbogen (K) angeordnet sind.
